# EUROPEAN PATENT APPLICATION

(11) **EP 0 641 520 A1**
(43) Date of publication of application: **08.03.1995**
(21) Application number: 94113342.3
(22) Date of filing: 25.08.1994
(51) Int. Cl.: A23L 1/315, A23L 1/317

(54) **Food product, method of and machine for the manufacture of food products**

(30) Priority: 06.09.1993 GB 9318467; 03.09.1993 GB 9318354
(71) Applicant: SUN VALLEY POULTRY LIMITED, Hereford, Worchestershire HR4 9PB (GB)
(72) Inventor: Jull, Harvey William Broadmead, Herefordshire HR1 3HT (GB); Clarke, Edward Thomas, Herefordshire HR1 3BT (GB); Edwards, Michael Elton, Hereford HR4 7QD (GB)
(74) Representative: Lally, William

(57) **Abstract**

A food product comprises a base (18) of meat, the base being provided with a cavity (20) in the form of a shallow well or depression, a cover (24) of meat secured to the base around a peripheral line, a filling (22) of the food product being located within the cavity (20) which is of a size sufficient to accommodate at least most of the filling. The food product (16) is made by a machine comprising a conveyor means (56, 58), a forming means (62, 64) for the base, a registration means (70, 72) to register the position of successive bases (18) on the conveyor, automatic means (74) to locate the filling (22) on the base, a means (76) for forming the covers of the food products and depositing the covers on successive bases, and a forming machine (80) for pressing the base and cover so as to form the food product into a desired shape and to ensure that the base and cover are secured together around said peripheral line.

## Description

### Description of Invention

This invention is concerned with improvements relating to food products, and to methods of manufacture of food products. The invention has been devised primarily in relation to the production of a meat-based product, and in particular to a product based on the muscle meat of poultry. It is however to be appreciated that the invention may be utilised for meat in general terms, including fish, and particularly may be utilised in relation to re-constituted meat, and synthetic meat products based on vegetable protein, such a soya.

In the specification of our UK patent No. 2231250 (the disclosure of which is hereby incorporated herein by way of reference) there is described a food product comprising a base of meat and a cover of meat, the base and cover having been secured together around a peripheral line with portions of the base and cover within the peripheral line being spaced apart to provide a cavity in which a filling of the food product is located. Such a food product is hereinafter referred to as being of the kind specified.

A problem which on occasion occurs in the use of the product described in the specification of said U.K. patent is that on occasion, during cooking, the sauce leaks through the seal between the base and cover, and this is disadvantageous both to the cook and to the consumer.

According to a first aspect of this invention, there is provided a food product of the kind specified, wherein the base is provided with a shallow well or depression within which filling is located.

Preferably the base is in the form of a shallow cylinder, and the cavity is also circular, the cavity having a radius of between half and three quarters of the radius of the base, and the depth of the cavity being between one third and two thirds of the depth of the base.

By location of the cavity or well (hereinafter referred to for convenience as cavity) beneath the plane in which the base and cover are secured together (when viewed in the orientation adopted for cooking) tendency for the sauce to leak from the product is significantly reduced.

According to this invention there is also provided a method of making a food product of the kind specified, wherein during forming of the base a mould member is utilised to provide a depression within the base, the size of the depression being sufficient to accommodate at least most of the filling of the product during cooking.

According to this invention there is also provided a base for a food product of the kind specified, the base having been provided with a cavity within which a filling for the food product is or may be located.

Another problem encountered in food products of the kind specified is forming the products in a suitable manner by an automatic operation, and according to a further aspect of this invention there is provided a machine for the manufacture of a food product of the kind specified, comprising
a) conveyor means;
b) means for forming the base, and depositing the base on the conveyor;
c) means for registering the position of successive bases on the conveyor;
d) means for forming the covers of the food products and depositing covers on successive bases; and
e) a forming means comprising a plurality of mould members mounted on a carousel, said carousel operating in timed relationship with the conveyor to bring the mould members into successive engagement with a base and cover, to press the base and cover together so as to form the food product into a desired shape and to ensure that the base and cover are secured together around said peripheral line.

Preferably the seal between the base and cover is provided in part at least by myacin, such as is described in the above-mentioned patent specification.

Advantageously the machine comprises means automatically to locate a filling for the food product, which may comprise vegetable material, or a mixture of vegetables and/or meat, or a sauce for the meat, on the base prior to location on the base of the cover.

Preferably the mould members each comprise a peripheral flange, adapted to engage around a peripheral, outer wall of the base, to restrain the base against "spreading" under pressure applied thereto by said mould member.

Thus preferably the mould member has a cavity in the general form of a dome, provided with a peripheral flange.

The interior of the mould member may be of non-stick material such as PTFE, and/or may be provided with a plurality of internal passages through which air under a low pressure may be fed to ensure that the cover of the food product releases readily from the mould member as the mould member is removed from engagement thereof, without distortion or deformation of the food product.

Preferably the mould member is of porous (e.g. sintered) material, the forming mechanism comprising means to introduce air under a relatively low pressure to the mould member to effect separation of the mould member from the food product.

Advantageously the mould member is provided with a resilient sealing means, operative to engage the meat product around said peripheral line, to ensure securement of the base and cover along said peripheral line.

Preferably the resilient sealing means is afforded by a gasket, such as an O-ring of neoprene rubber or silicon rubber or the like, the compressibility of which may be selected as required to effect adequate sealing without unduly deforming the food product from the desired shape.

Whilst the machine specified above may be utilised in the manufacture of food products of the kind specified in general, the machine is particularly suitable for use in the manufacture of a food product in accordance with the first aspect of this invention, and preferably therefore, the means for forming the base is adapted to provide the base with a well or cavity, as identified above.

There will now be given a detailed description, to be read with reference to the accompanying drawings, of an apparatus and a machine for making a food product, the apparatus, the machine and the food product all being illustrative of certain aspects of the invention.

In the accompanying drawings:-
Figure 1 is a schematic view of the food product in accordance with the invention;
Figure 2 is a schematic view illustrating the machine by which the food product is manufactured;
Figure 3 is a schematic exploded perspective view showing part of the machine which is the preferred embodiment of the invention;
Figure 4 is a vertical sectional view corresponding to Figure 3;
Figure 5 is an enlarged sectional view taken at the position B of Figure 2;
Figure 6 is an enlarged sectional view taken at the position C; and
Figure 7 is an enlarged view of part of Figure 6.

The food product 16 which is the preferred embodiment of this invention is a food product of the kind specified, comprising a base 18 of meat, the base being provided with a cavity afforded by a shallow well or depression 20, a cover 24 of meat secured to the base around a peripheral line, the base and cover thus being spaced apart over a region within said peripheral line within which a filling 22 of the food product is located, the size of the cavity 20 being sufficient to accommodate at least most of the filling 22.

In general the base is in the form of a shallow cylinder, i.e. being generally circular in outline, and the cavity 20 is also generally circular, the cavity having a radius of about two thirds the radius of the base 18, and a depth of about half the depth of the base.

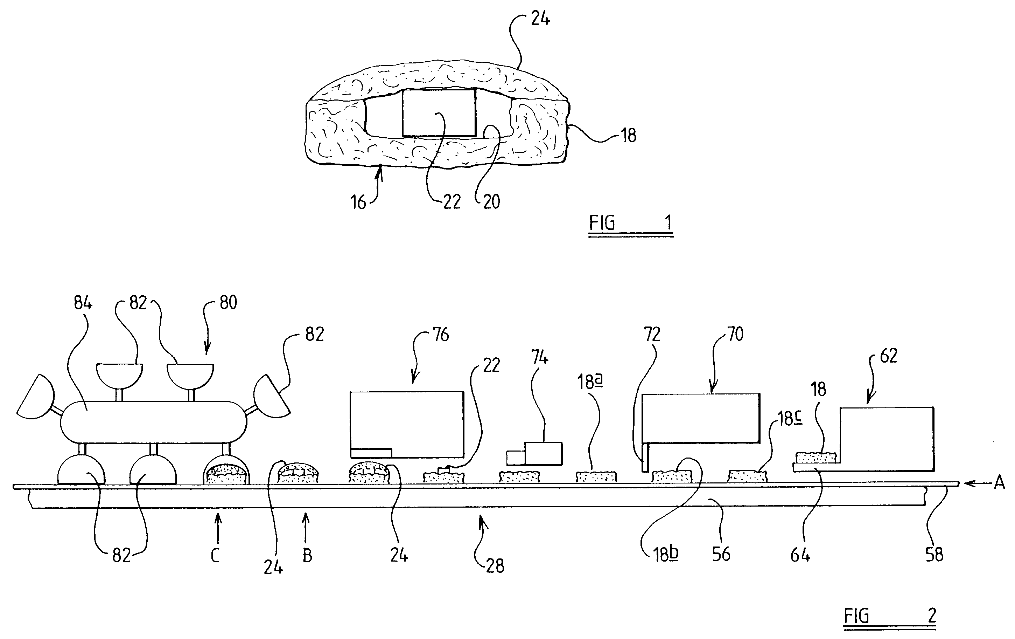

The food product 16 is made by a machine 28 (Figure 2) which is also illustrative of the invention, said machine comprising a bed 56 providing a firm support for a reach 58 of a conveyor belt, which is driven by means (not shown) in the direction of the arrow A of Figure 2.

Located adjacent to an upstream section of the conveyor belt 58 is a device 62 for forming the bases 18 of the food product, particularly in the form of a patty of muscle meat such as of poultry, being flat, generally circular and relatively thin, the device 62 comprising a conveyor 64 travelling above the conveyor belt 58 to locate bases 18 on the conveyor belt 58 at approximately uniform time intervals, to provide a series of bases (18a, 18b, 18c) generally uniformly spaced on the conveyor 58 as it travels through the machine.

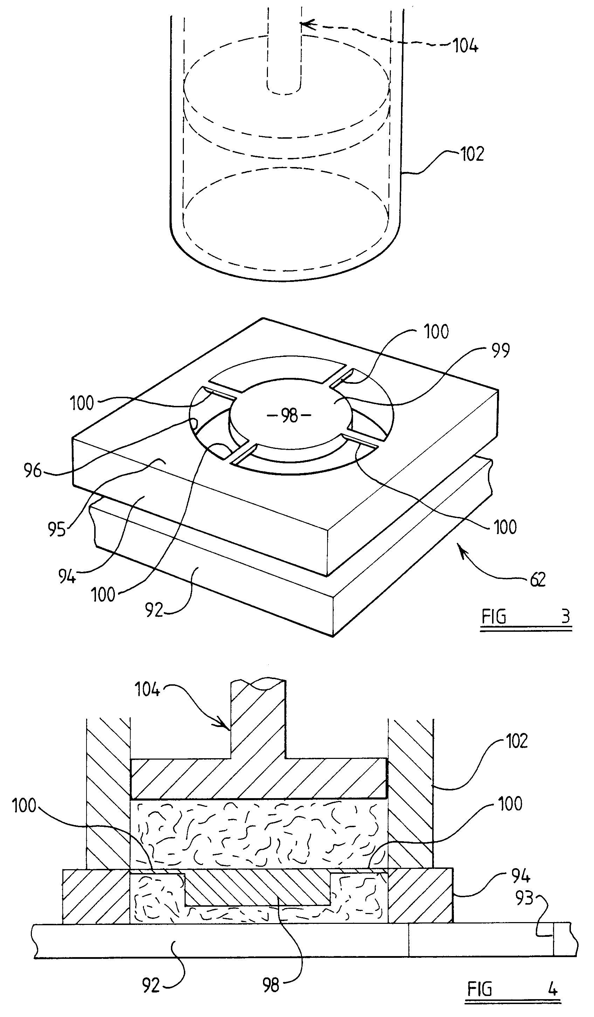

The base-forming device 62 comprises a base plate 92 (Figures 3 and 4) on which is mounted for relative sliding movement a die 94 having a central cylindrical cavity 96. Located within the cavity 96 is a former 98, which is also cylindrical, having a radius typically between one half and three quarters of the radius of the cavity 96, the depth of the former 98 being approximately one half of the depth of the cavity 96.

The former 98 is located in a position in which it lies generally centrally of the periphery of the cavity 96, having an upper surface 99 generally flush with the upper surface 95 of the die 94, by four radially-extending blades 100.

Mounted above the die 94 is a pressing device comprising a cylinder 102 within which a ram 104 is mounted. Comminuted meat (for example) may be introduced into the cylinder 102 and forced into the cavity 96, the meat flowing around the blades 100 (as shown in Figure 3) to form a base 18 generally as shown in Figure 1, the base having a peripheral wall and a generally central cavity 20 within which a filling 22 may be located.

On conclusion of the pressing operation, the base plate 92 is moved laterally until an aperture 93, having a diameter equal to the diameter of the cavity 96, is in alignment with the cavity 96, whereupon the formed base 18 may be pressed from the die 94. The base plate 92 is then returned to its original position, for the pressing of a subsequent base 18.

Alternatively to a pressing operation, an extrusion operation may be utilised.

Conveniently the meat is pressed into the cavity 96 of the die 94 at a low temperature, such as about -4°C, conveniently means (not shown) being provided to warm the surfaces of the cavity 96 slightly, to reduce the tendency for sticking to occur.

Advantageously, the former 98 is provided by, or comprises sintered material, at least on the base thereof, through which air under pressure may be caused to flow to assist removal of the product from the die 94, subsequent to separation thereof from the base plate 92.

Alternatively or addition the former 98 may be provided with means to increase the temperature of the surface thereof, to reduce the tendency for the food product to stick to the former on removal.

Located somewhat downstream of the device 62 is a register device 70, which operates to ensure that the bases 18 are accurately and uniformly spaced on the conveyor 58. Conveniently said register device 70 comprises a removable finger 72, to prevent movement through the register device of a patty at too early a time, together with (optionally) a sensing device in the form of a photocell.

Located downstream of the register device 70 is a device 76 for forming the cover for the food product, said device 76 operating in a conventional way and depositing covers 24 in timed relationship with the register device 70 on the bases 18 as they pass beneath the device 76.

Between the devices 70 and 76 is a device 74 for depositing a small frozen block 22 of a filling or sauce for the food product on successive bases 18, specifically into the central well 20 thereof.

A forming mechanism 80 comprising a plurality of mould members 82 is mounted on a carousel 84, whereby each mould member 82 is moved in turn into a position in which it engages the conveyor 58 under pressure. Rotation of the carousel 84 is in timed relationship with the movement of the conveyor 58, and the location of the mould members 82 is synchronised with the register device 70, so that as each mould 82 in turn moves into a position opposite to the conveyor 58, it engages within its cavity the cover and base of a food product to be moulded. The mould retains the base and cover under a moulding pressure for a short period of time, whereupon the mould member moves away from the conveyor 58, releasing the food product which is now in its moulded condition. The food product may then be subjected to a brief heating operation, to ensure that protein (e.g. myacin) provided between the abutting surfaces of the base and cover "sets" to firmly adhere the food product together, or may be provided with an edible coating, prior to being (for example) flash fried.

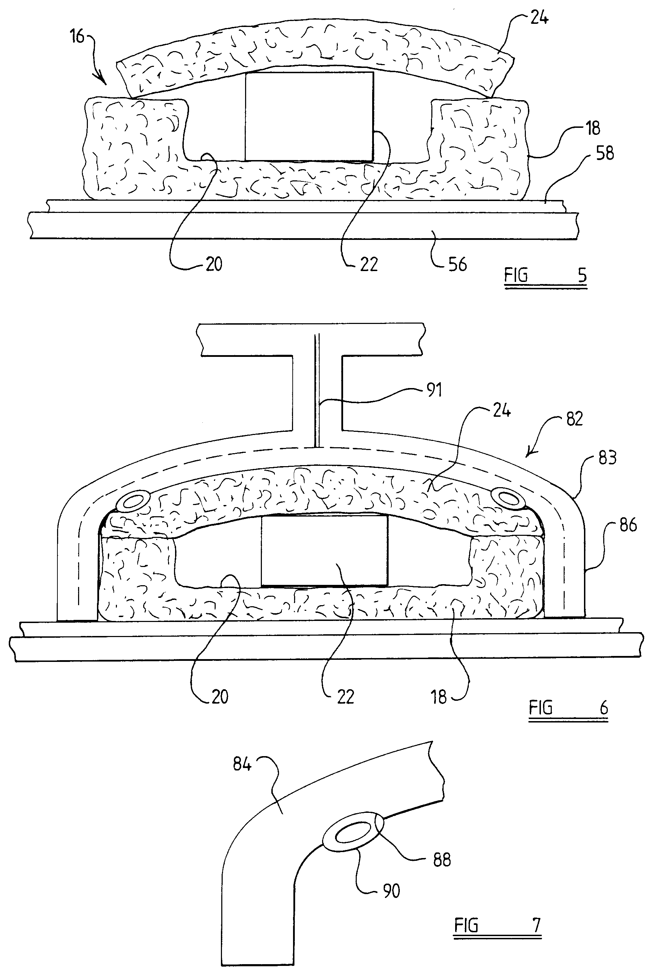

Each mould 82 comprises a generally cup-shaped portion 83 which is dome-shaped, being provided with a peripheral lip 86 (see Figure 6), the mould member being provided on its interior surface with porous or sintered material, conveniently being of a low-friction material, such as may he obtained by coating with PTFE.

Adjacent to the junction between the domed section 84 and the lip 86 is a circular channel 88, within which a resilient sealing member 90 is located, said sealing member conveniently being in the form of an O-ring of neoprene rubber, silicon rubber or the like (see Figure 7).

Figure 6 illustrates the manner in which one of the mould members 82 engages the food product, and forms it by pressing against the conveyor 58 onto the bed 56, deforming the food product into the desired dome shape, the sealing member 90 ensuring an adequate pressure between the base and the cover around the peripheral line, to ensure adequate sealing therebetween without departing from the desired shape, as the mould and product move in synchronism with the conveyor 56.

Immediately prior to separation of the mould from the conveyor 58, air under low pressure is fed to the mould, conveniently through an air passage 91 and passes through the pores thereof to ensure release of the food product from the mould as the mould moves away from the conveyor 58.

Whilst the machine above described is particularly useful in the manufacture of the food product which is the preferred embodiment of this invention it will be appreciated that the machine may be used to advantage in the manufacture of other food products of the kind specified.

The features disclosed in the foregoing description, or the accompanying drawings, expressed in their specific forms or in the terms or means for performing the desired function, or a method or process for attaining the disclosed result, may, separately or in any combination of such features, be utilised for realising the invention in diverse forms thereof.

## Claims

1. A food product comprising a base (18) of meat, a cover (24) of meat, the base and cover having been secured together around a peripheral line with portions of the base and cover within the peripheral line being spaced apart to provide a cavity in which a filling (22) of the food product is located, characterised in that the cavity comprises a shallow well or depression (20) in the base, in which the filling (22) is located.

2. A food product according to Claim 1 wherein the base (18) is generally circular in outline, and the cavity (20) is also generally circular, the radius of the cavity being between half and three quarters of the radius of the base, and/or the depth of the cavity being between one third and two thirds the depth of the base (18).

3. A food product according to one of Claims 1 and 2 wherein the cavity (20) in the base (18) lies beneath the plane in which the base and cover are secured together.

4. A method of making a food product of the kind specified, wherein during forming of the base (18) a mould member (98) is utilised to provide a depression (20) within the base, the size of the depression being sufficient to accommodate at least most of the filling (22) of the product.

5. A base for a food product of the kind specified, the base (18) having been provided with a cavity (20) within which a filling for the food product is or may be located.

6. A machine for the manufacture of a food product of the kind specified, comprising
a) conveyor means (56, 58);
b) means (62, 64) for forming the base, and depositing the base on the conveyor (58);
c) means (70, 72) for registering the position of successive bases (18) on the conveyor;
d) means (76) for forming the covers (28) of the food products and depositing covers on successive bases (24); and
e) a forming means (80) comprising a plurality of mould members (82) mounted on a carousel (84), said carousel operating in timed relationship with the conveyor (58) to bring the mould members (82) into successive engagement with a base and cover (18, 24), to press the base and cover together so as to form the food product into a desired shape and to ensure that the base and cover are secured together around said peripheral line.

7. A machine according to Claim 6 comprising means (74) automatically to locate a filling (22) for the food product on the base (18) prior to location on the base of the cover (24).

8. A machine according to one of Claims 6 and 7 wherein each mould member (82) comprises a peripheral flange (86), preferably providing a cavity in the general form of a dome.

9. A machine according to any one of Claims 6, 7 and 8 wherein each mould member is provided with a resilient sealing means (90) operative to engage the meat product around said peripheral line, to ensure securement of the base and cover along said peripheral line.

10. A machine according to any one of Claims 6 to 9 wherein the means (62, 64) for forming the base is operative to provide the base with a shallow well or depression (20) within which the food product is located.
